# EUROPEAN PATENT SPECIFICATION

(11) **EP 4 186 727 B1**
(45) Date of publication and mention of the grant of the patent: **07.05.2025**
(21) Application number: 22200063.0
(22) Date of filing: 06.10.2022
(51) Int. Cl.: B64D 27/18, B64D 27/24, B64D 27/02

(54) **SYSTEM AND METHOD FOR ELECTRIC LOAD CONTROL FOR A VEHICLE**
SYSTEM UND VERFAHREN ZUR STEUERUNG DER ELEKTRISCHEN LAST FÜR EIN FAHRZEUG
SYSTÈME ET PROCÉDÉ DE COMMANDE DE CHARGE ÉLECTRIQUE POUR UN VÉHICULE

(30) Priority: 29.11.2021 US 202117536799
(43) Date of publication of application: 31.05.2023
(73) Proprietor: General Electric Company, Evendale, OH 45215 (US)
(72) Inventor: HON, Robert Charles, Cincinnati, 45215 (US); BROWN, Thomas William, Cincinnati, 45215 (US); GEMIN, Paul Robert, Cincinnati, 45215 (US); DETWEILER, Greg, Cincinnati, 45215 (US)
(74) Representative: Openshaw & Co.

(56) References cited:
- EP-A1- 3 650 352
- CA-A1- 3 132 945
- US-A1- 2005 179 264
- US-A1- 2015 019 175
- US-A1- 2016 236 790
- US-A1- 2020 131 995
- US-A1- 2021 339 850
- US-B2- 7 298 102

## Description

### FIELD

The present disclosure relates generally to systems and methods for controlling a hybrid-electric power system for a vehicle.

### BACKGROUND

Vehicles, such as aircraft, are increasingly challenged to improve operating efficiency, reduce fuel consumption, and reduce or eliminate emissions. Aircraft are particularly challenged with increasing electrification to drive various aircraft systems and sub-systems. Utilizing hybrid-electric power systems by extracting power from propulsion systems to provide electric energy to drive an electrically-driven device may provide one or more such benefits. However, the inventors of the present disclosure have found that changes in load demand and energy output may adversely affect operation of the propulsion system or the electrically-driven devices, such as to lead into over-voltage, overspeed, or other undesired over-load conditions.

Furthermore, vehicles such as aircraft are limited with regard to a quantity of communicative couplings, sensing, and measurement between various components of the hybrid-electric power system. For instance, increased communicative couplings require increased communications channels, increased memory and storage, and increased processing, which may adversely increase vehicle complexity, performance, cost, and operability.

As such, there is a need for improved systems and methods for controlling hybrid-electric power systems.

CA 3132945 A1 relates to a hybrid propulsion system for a multi-rotor rotary-wing aircraft, comprising: an internal combustion engine, an electric machine coupled to the internal combustion engine, a rectifier connected to the electric machine, conversion means, an electric network connecting the rectifier to the conversion means, electric motors connected to the conversion means, rotary-blade assemblies coupled to the electric motors, the system being characterized in that it comprises: detection means configured to detect a reduction in a demand for electrical power within the system to below a predetermined value, bypass means configured to bypass the electric machine when the detection means detects a reduction in the demand for electrical power.

US 2021/339850 A1 relates to a propulsion system for a multirotor aircraft, the propulsion system comprising: at least one power generation module configured to provide a first source of electrical power to one or more propulsion assemblies of the multirotor aircraft; a control system which is configured to determine the required electrical power demand of the propulsion assembly and calculate a predicted electrical power demand for a following period of time; wherein the control system is configured to alter the electrical power produced by the power generation module such as to produce a power envelope which comprises the electrical power produced by the power generation module corresponding to the predicted electrical power demand; wherein the control system is configured to determine if the power envelope meets the required electrical power demand; and wherein when the power envelope is less than the required electrical power demand the control system is configured to selectively connect a second source of electrical power for supplying power to the propulsion assembly such as to compensate for the difference between the power envelope and the required electrical power demand.

EP 3 650 352 A1 relates to a hybrid aircraft propulsion system including one or more power units configured to output electrical energy onto one or more electrical busses; a plurality of propulsors; and a plurality of electrical machines, each respective electrical machine configured to drive a respective propulsor of the plurality of propulsors using electrical energy received from at least one of the one or more electrical busses.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
Fig. 1 is a top view of an aircraft according to various exemplary embodiments of the present disclosure;
Fig. 2 is a port side view of the exemplary aircraft of Fig. 1;
Fig. 3 is a schematic, cross-sectional view of a gas turbine engine as may be mounted to the exemplary aircraft of Fig. 1;
Fig. 4 is a schematic, cross-sectional view of an aft engine in accordance with an exemplary embodiment of the present disclosure;
Fig. 5 is a schematic diagram depicting a system for controlling and operating a load device in accordance with aspects of the present disclosure;
Fig. 6 is an exemplary graph of torque versus voltage in accordance with aspects of the present disclosure;
Fig. 7 is an exemplary graph of torque versus operating parameter in accordance with aspects of the present disclosure;
Fig. 8 is a schematic diagram depicting a system for controlling and operating a load device in accordance with other aspects of the present disclosure;
Fig. 9 is a schematic diagram depicting a system for controlling and operating a load device in accordance with still other aspects of the present disclosure; and
Fig. 10 is a flowchart outlining exemplary steps of a method operating a vehicle in accordance with aspects of the present disclosure.

Repeat use of reference characters in the present specification and drawings is intended to represent the same or analogous features or elements of the present disclosure.

### DETAILED DESCRIPTION

Reference now will be made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

Additionally, the terms "low," "high," or their respective comparative degrees (e.g., lower, higher, where applicable) each refer to relative speeds within an engine, unless otherwise specified. For example, a "low-pressure turbine" operates at a pressure generally lower than a "high-pressure turbine." Alternatively, unless otherwise specified, the aforementioned terms may be understood in their superlative degree. For example, a "low-pressure turbine" may refer to the lowest maximum pressure turbine within a turbine section, and a "high-pressure turbine" may refer to the highest maximum pressure turbine within the turbine section.

Embodiments of a vehicle, an electric bus system, and methods for operation are provided. Embodiments of the methods and systems depicted and described herein provide for control and operation of power distribution system, such as a hybrid-electric power system. Embodiments of the system and method provided herein may mitigate or eliminate over-load conditions, or furthermore limit communicative couplings between components of a hybrid-electric power system, allowing for improved efficiency and reduced complexity. In a particular embodiment, the system includes a vehicle, such as an aircraft having an engine, such as a propulsion system, or particularly a gas turbine engine propulsion system. An electric machine, such as a generator or motor-generator system, is operably connected to the engine to extract power and distribute electric power to a load device. Various embodiments of the load device may be an electrically-driven device, such as a thrust-generating system (e.g., an electrically-driven propulsion system, a boundary layer ingestion (BLI) fan, a rotary wing device, a lift or tilt-rotor system, etc.), pumps, compressors, thermal systems (e.g., environmental control system (ECS)), thermal management system (TMS), heating elements (e.g., anti-icing systems), radars, LIDARs, avionics, communications devices, directed-energy systems, electric motors, or other electrical systems at the vehicle.

Systems and methods provided herein include a computing system operably coupled to control the engine and the electric machine. The computing system is configured to execute operations that command the engine to generate torque, and for the electric machine to extract torque from the engine. The computing system may include schedules, graphs, charts, look-up tables, curves, or other predetermined settings for operating the engine within operability, performance, health, and/or safety limits of the engine. Predetermined settings may further include engine limits, or particularly all desired engine limits, within which the commanded torque extraction is limited to. The load device, such as an electric propulsion engine or electric motor separate from the engine, receives electric power provided from the electric machine via an electric bus.

A first power electronics device, such as a first inverter at the electric machine, controls torque extraction from the engine. The computing system controls torque extraction by the electric machine, such as by decreasing, increasing, or maintaining torque extraction, and further limits power output to the load device to prevent over-voltage at the electric bus. The computing system provides control commands to the engine and the first power electronics device to maintain bus voltage at desired levels, such as within voltage limits. Accordingly, the amount of torque extracted from the engine to generate power to the load device is controlled by the computing system. The first power electronics device, or the computing system configured to send and receive control commands to the first power electronics device, is configured in a power or torque control mode. The first power electronics device communicates with the computing system to exchange operating parameters, such as total power drawn, bus voltage, current, etc. As such, the amount of torque extracted by the electric machine, and subsequently the amount of power output to the load device, is regulated by the computing system and first power electronics device to keep the engine within desired operating limits. During operation of the system and execution of the method, the engine is controlled by the computing system (e.g., a FADEC or other engine controller) in accordance with operating parameters and operating limits at the engine, such as, but not limited to, stall margin, surge margin, rotor speed, temperature (e.g., exhaust gas temperature), torque output, thrust output, pressure ratio, or associated minimum and maximum limits relative thereto, or any other operability limit, performance limit, health/safety limit, or any other appropriate control limit of the engine.

An electric bus operably couples the first power electronics device to a second power electronics device, such as a second inverter operably coupled to the load device(s). The second power electronics device is configured in a voltage control mode to control power received at the load device(s). Accordingly, during operation of the system and execution of the method, the second power electronics device controls the load device relative to predetermined operating limits associated with the load device. When the second power electronics device approaches or exceeds the operating limits, the power received at the load device is limited. The load device operating limit may correspond to an electric propulsion engine rotational speed limit, stall margin at the electric propulsion engine, surge margin at the electric propulsion engine, a power output limit at the load device, a temperature limit at the load device, a flow limit at the load device, or any other operability, performance, health, or safety limit at the load device(s). Additionally, or alternatively, the second power electronics device may control the load device relative to voltage associated with the electric bus, such as a voltage limit of the electric bus. When the electric bus approaches or exceeds the voltage limit, the power received at the load device may be modified to reduce a voltage within the electric bus.

In an exemplary embodiment of operation, the computing system commands the engine to operate, such as to generate torque to be extracted by the electric machine to generate output power to the load device. Operation of the engine may be performed in accordance with a predetermined setting, schedule, chart, graph, table, etc. In a particular embodiment, operation of the engine includes generating and providing output power to the load device in accordance with the predetermined setting, schedule, chart, graph, table, etc. The computing system commands the first power electronics device and electric machine to extract torque from the engine and output power to the load device through the bus connecting the first power electronics device to the second power electronics device. The second power electronics device receives power from the first power electronics device and provides the output power to the load device(s). The second power electronics device allows the load device(s) to receive power through the bus until the load device(s) have reached a desired operating mode (e.g., a rated speed, rotational speed, flow rate, power or thrust output, temperature, pressure, pressure ratio, etc. at the load device). The second power electronics device limits the amount of power provided to the load device(s) in accordance with the load device operating limit (and additionally or alternatively, the electric bus voltage). **In** various embodiments, the second power electronics device includes a predetermined setting, schedule, function, graph, chart, table, etc. corresponding to the voltage limit.

During operation, the second power electronics device will limit the power output in accordance with the load device operating limit. For instance, the second power electronics device may limit current to the load device when the load device is at or above the load device operating limit. In an embodiment in which the load device is an electric propulsion engine, the load device operating limit may correspond to an electric propulsion engine rotational speed limit, a flow limit, a temperature limit, a power output limit, or other limit associated with the electric propulsion engine. Accordingly, the second power electronics device implements overlimit protection by reducing allowable torque at the load device when approaching an overlimit zone. As the power output to the load device is limited by the second power electronics device, the first electronics device senses, measures, or otherwise detects an increase in voltage at the electric bus. The first power electronics device commands, controls, or otherwise modulates the electric machine to decrease the amount of torque or electric power extracted from the engine to maintain the voltage at the electric bus within the voltage limit. Accordingly, the decreased torque extraction decreases the power output from the electric machine to the load device, and furthermore modulates the bus voltage to return or remain within the voltage limit. As such, the system and method allow for the engine and electric machine to command or "push" electric power to the load device rather than the load device commanding or "pulling" power from the engine and electric machine. Such embodiments allow for the engine and electric machine to operate based on operability, performance, health, and/or safety limits of the engine, while mitigating conflict, fluctuation, or disturbance as may be caused by load devices commanding power requirements that may adversely affect one or more limits at the engine.

Systems and methods provided herein allow for power distribution to one or more load devices without requiring communicative coupling between the engines or electric machines. If a first electric machine at a first engine at the vehicle fails then a second electric machine at a second engine will not necessarily have an increase in extracted torque or power. Furthermore, embodiments provided herein allow for operation and control of the load device without direct communicative coupling between the electric machine and the load device. Additionally, embodiments provided herein allow for operating limit protection, such as electric propulsion engine overspeed protection, without requiring direct communicative coupling between the load device and the computing system.

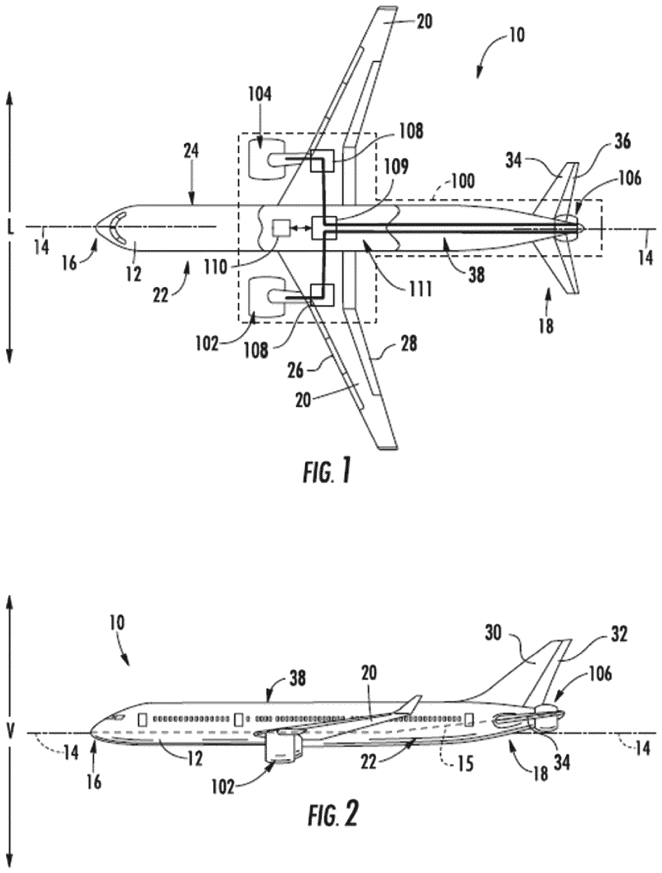

Referring now to the drawings, wherein identical numerals indicate the same elements throughout the figures, Fig. 1 provides a top view of an exemplary vehicle 10 as may incorporate various embodiments of the present disclosure. Fig. 2 provides a port side view of the vehicle 10 as illustrated in Fig. 1. As shown in Figs. 1-2 collectively, the vehicle 10 defines a longitudinal centerline 14 that extends therethrough, a vertical direction V, a lateral direction L, a forward end 16, and an aft end 18. Moreover, the vehicle 10 defines a mean line 15 extending between the forward end 16 and aft end 18 of the vehicle 10. As used herein, the "mean line" refers to a midpoint line extending along a length of the vehicle 10, not taking into account the appendages of the vehicle 10 (such as the wings 20 and stabilizers discussed below).

Moreover, the vehicle 10 includes a fuselage 12, extending longitudinally from the forward end 16 of the vehicle 10 towards the aft end 18 of the vehicle 10, and a pair of wings 20. As used herein, the term "fuselage" generally includes all of the body of the vehicle 10, such as an empennage of the vehicle 10. The first of such wings 20 extends laterally outwardly with respect to the longitudinal centerline 14 from a port side 22 of the fuselage 12 and the second of such wings 20 extends laterally outwardly with respect to the longitudinal centerline 14 from a starboard side 24 of the fuselage 12. Each of the wings 20 for the exemplary embodiment depicted includes one or more leading edge flaps 26 and one or more trailing edge flaps 28. The vehicle 10 further includes a vertical stabilizer 30 having a rudder flap 32 for yaw control, and a pair of horizontal stabilizers 34, each having an elevator flap 36 for pitch control. The fuselage 12 additionally includes an outer surface or skin 38. It should be appreciated however, that in other exemplary embodiments of the present disclosure, the vehicle 10 may additionally or alternatively include any other suitable configuration of stabilizer that may or may not extend directly along the vertical direction V or horizontal/ lateral direction L.

The exemplary vehicle 10 of Figs. 1-2 includes a propulsion system 100, herein referred to as "system 100". The exemplary system 100 includes one or more aircraft engines and one or more electric propulsion engines. For example, the embodiment depicted includes a plurality of aircraft engines, each configured to be mounted to the vehicle 10, such as to one of the pair of wings 20, and an electric propulsion engine 106. More specifically, for the embodiment depicted, the aircraft engines are configured as gas turbine engines, or rather as turbofan engines 102, 104 attached to the wings 20. In a particular configuration, the engines 102, 104 are suspended beneath the wings 20 in an under-wing configuration. However, the vehicle 10 may attach the engines 102, 104 in any appropriate configuration (e.g., over-wing, within or through the wing, fuselage-mounted, etc.) In certain embodiments, the electric propulsion engine 106 is configured to be mounted at the aft end of the vehicle 10. Further, the electric propulsion engine depicted may be configured to ingest and consume air forming a boundary layer over the fuselage 12 of the vehicle 10. Accordingly, the exemplary electric propulsion engine 106 depicted may be referred to as a boundary layer ingestion (BLI) fan. In the embodiment depicted, the electric propulsion engine 106 is mounted to the vehicle 10 at a location aft of the wings 20 and/or the engines 102, 104. For a BLI fan embodiment of the electric propulsion engine 106, the electric propulsion engine 106 is fixedly connected to the fuselage 12 at the aft end 18, such that the electric propulsion engine 106 is incorporated into or blended with a tail section at the aft end 18, and such that the mean line 15 extends therethrough. It should be appreciated, however, that in other embodiments the electric propulsion engine 106 may be configured in any other suitable manner, such as at the fuselage 12 or the wings 20. In still various embodiments, the electric propulsion engine 106 may not necessarily be configured as an aft fan or as a BLI fan.

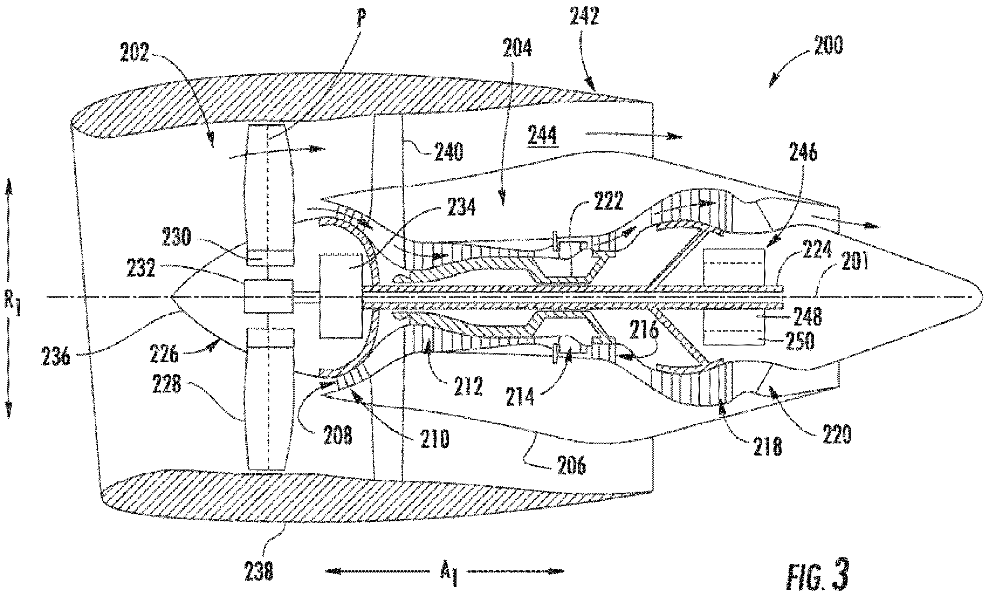

Referring still to the embodiment of Figs. 1-2, in certain embodiments the propulsion system further includes one or more electric generators 108 operable with the engines 102, 104. For example, one or both of the engines 102, 104 may be configured to provide mechanical power from a rotating shaft (such as an LP shaft or HP shaft) to the electric generators 108. Although depicted schematically outside the respective engines 102, 104, in certain embodiments, the electric generators 108 may be positioned within a respective engine 102, 104 (e.g., such as depicted and described herein with regard to Fig. 3). Additionally, the electric generators 108 may be configured to convert the mechanical power to electrical power. For the embodiment depicted, the propulsion system 100 includes an electric generator 108 for each engine 102, 104, and also includes a power conditioner 109 and an energy storage device 110. The electric generators 108 may send electrical power to the power conditioner 109, which may transform the electrical energy to a proper form and either store the energy in the energy storage device 110 or send the electrical energy to the electric propulsion engine 106. For the embodiment depicted, the electric generators 108, power conditioner 109, energy storage device 110, and electric propulsion engine 106 are all are connected to an electric communication bus 111, such that the electric generator 108 may be in electrical communication with the electric propulsion engine 106 and/or the energy storage device 110, and such that the electric generator 108 may provide electrical power to one or both of the energy storage device 110 or the electric propulsion engine 106. Accordingly, in such an embodiment, the propulsion system 100 may be referred to as a gas-electric or hybrid-electric propulsion system.

It should be appreciated, however, that the vehicle 10 and propulsion system 100 depicted in Figs. 1-2 is provided by way of example only and that in other exemplary embodiments of the present disclosure, any other suitable vehicle 10 may be provided having a propulsion system 100 configured in any other suitable manner. For example, it should be appreciated that in various other embodiments, the electric propulsion engine 106 may alternatively be positioned at any suitable location proximate the aft end 18 of the vehicle 10. Further, in still other embodiments the electric propulsion engine may not be positioned at the aft end of the vehicle 10, and thus may not be configured as an "aft engine." For example, in other embodiments, the electric propulsion engine may be incorporated into the fuselage of the vehicle 10, and thus configured as a "podded engine," or pod-installation engine. Further, in still other embodiments, the electric propulsion engine may be incorporated into a wing of the vehicle 10, and thus may be configured as a "blended wing engine." Moreover, in other embodiments, the electric propulsion engine may not be a boundary layer ingestion fan, and instead may be mounted at any suitable location on the vehicle 10 as a freestream injection fan. Furthermore, in still other embodiments, the propulsion system 100 may not include, e.g., the power conditioner 109 and/or the energy storage device 110, and instead the generator(s) 108 may be directly connected to the electric propulsion engine 106.

Referring now to Fig. 3, a schematic cross-sectional view of a propulsion engine in accordance with an exemplary embodiment of the present disclosure is provided. In certain exemplary embodiments, the propulsion engine may be configured a high-bypass turbofan engine 200, herein referred to as "engine 200." Notably, in at least certain embodiments, the engines 102, 104 may be also configured as high-bypass turbofan engines. In various embodiments, the gas turbine engine 200 may be representative of engines 102, 104. Alternatively, however, in other embodiments, the gas turbine engine 200 may be incorporated into any other suitable vehicle 10 or propulsion system 100.

As shown in Fig. 3, the gas turbine engine 200 defines an axial direction A1 (extending parallel to a longitudinal centerline 201 provided for reference) and a radial direction R1. In general, the gas turbine engine 200 includes a fan section 202 and a core turbine engine 204 disposed downstream from the fan section 202.

The exemplary core turbine engine 204 depicted generally includes a substantially tubular outer casing 206 that defines an annular inlet 208. The outer casing 206 encases, in serial flow relationship, a compressor section including a booster or low pressure (LP) compressor 210 and a high pressure (HP) compressor 212; a combustion section 214; a turbine section including a high pressure (HP) turbine 216 and a low pressure (LP) turbine 218; and a jet exhaust nozzle section 220. A high pressure (HP) shaft or spool 222 drivingly connects the HP turbine 216 to the HP compressor 212. A low pressure (LP) shaft or spool 224 drivingly connects the LP turbine 218 to the LP compressor 210.

For the embodiment depicted, the fan section 202 includes a variable pitch fan 226 having a plurality of fan blades 228 coupled to a disk 230 in a spaced apart manner. As depicted, the fan blades 228 extend outwardly from disk 230 generally along the radial direction R1. Each fan blade 228 is rotatable relative to the disk 230 about a pitch axis P by virtue of the fan blades 228 being operatively coupled to a suitable actuation member 232 configured to collectively vary the pitch of the fan blades 228 in unison. The fan blades 228, disk 230, and actuation member 232 are together rotatable about the longitudinal axis 14 by LP shaft 224 across a power gear box 234. The power gear box 234 includes a plurality of gears for stepping down the rotational speed of the LP shaft 224 to a more efficient rotational fan speed.

Referring still to the exemplary embodiment of Fig. 3, the disk 230 is covered by rotatable front hub 236 aerodynamically contoured to promote an airflow through the plurality of fan blades 228. Additionally, the exemplary fan section 202 includes an annular fan casing or outer nacelle 238 that circumferentially surrounds the fan 226 and/or at least a portion of the core turbine engine 204. It should be appreciated that the nacelle 238 may be configured to be supported relative to the core turbine engine 204 by a plurality of circumferentially-spaced outlet guide vanes 240. Moreover, a downstream section 242 of the nacelle 238 may extend over an outer portion of the core turbine engine 204 so as to define a bypass airflow passage 244 therebetween.

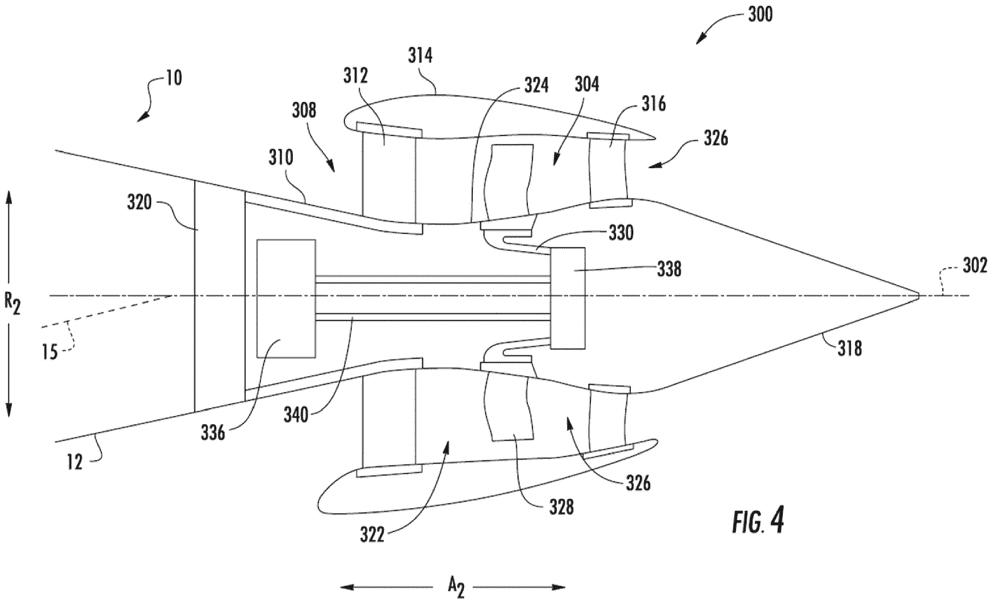

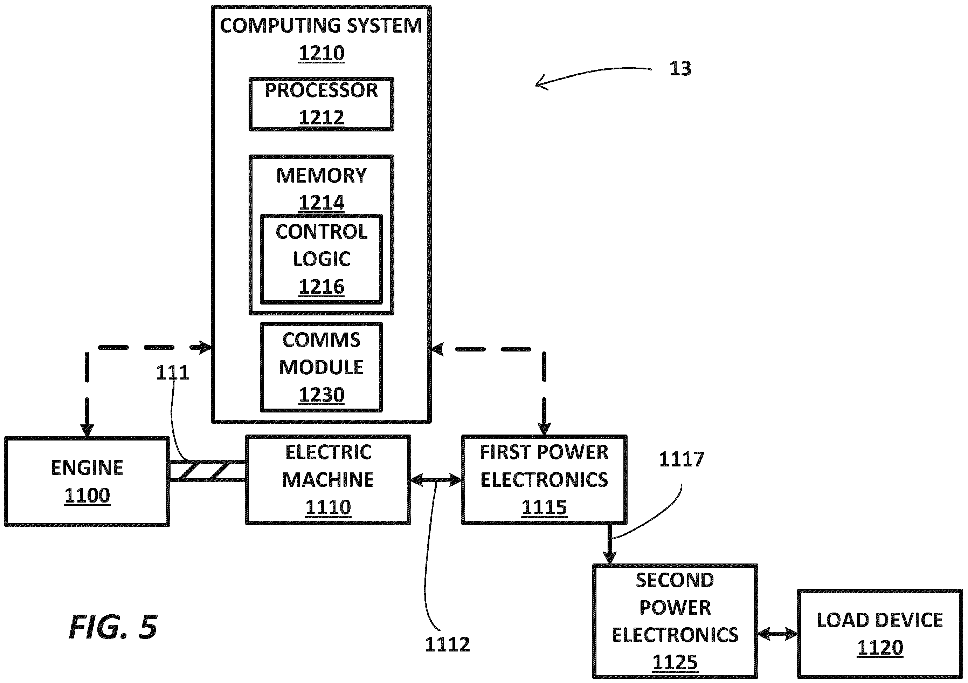

Additionally, the exemplary gas turbine engine 200 depicted includes an electric machine 246 rotatable with the LP shaft 224. Specifically, for the embodiment depicted, the electric machine 246 is configured as an electric generator co-axially mounted to and rotatable by the LP shaft 224. For the embodiment depicted, the LP shaft 224 also rotates the fan 226 through the power gearbox 234. The electric machine 246 includes a rotor 248 and a stator 250. In certain exemplary embodiments, the rotor 248 and stator 250 of the electric machine 246 are configured in substantially the same manner as the exemplary rotor and stator of the electric motor 336 described below with reference to Fig. 4. The electric machine 246 depicted and described with regard to Fig. 3 may further form the electric machine 1110 described below with reference to Fig. 5 through Fig. 10. Additionally, as will be appreciated, the rotor 248 may be attached to the LP shaft 224 and the stator 250 may remain static within the core turbine engine 204. During operation, the electric machine may define an electric machine tip speed (i.e., a linear speed of the rotor 248 at an airgap radius of electric machine 246, as described below). Notably, when the engine 200 is integrated into the propulsion system 100 described above with reference to Figs. 1-2, the electric generators 108 may be configured in substantially the same manner as the electric machine 246 of Fig. 3. In particular embodiments, the electric generators 108 in Figs. 1-2 may form the electric machine 246 of Fig. 3, and/or form the electric machine 1110 of Fig. 5 through Fig. 10.

It should also be appreciated, however, that the exemplary engine 200 depicted in Fig. 3 is by way of example only, and that in other exemplary embodiments, the turbofan engine 200 may have any other suitable configuration. For example, although rotor 248 is illustrated as being attached to the LP shaft 224, it should be appreciated that rotor 248 could alternatively be attached to the HP shaft 222 or any other suitable shaft. Additionally, or alternatively, although the electric machine 246 is depicted at an aft end of the engine 200 in Fig. 3, the electric machine 246 may be positioned at a forward or mid-portion of the engine 200, or any other appropriate part of the engine 200 or vehicle 10 provided herein. Further, it should be appreciated, that in other exemplary embodiments, the engines 102, 104 may instead be configured as any other suitable aeronautical engine, such as a turboprop engine, turbojet engine, internal combustion engine, reciprocating engine, combined-cycle engine, etc.

Referring now to Fig. 4, a schematic, cross-sectional side view of an electric propulsion engine in accordance with various embodiments of the present disclosure is provided. The electric propulsion engine depicted may be mounted to a vehicle 10 at an aft end 18 of the vehicle 10 and is configured to ingest a boundary layer air. Accordingly, for the embodiment depicted, the electric propulsion engine may be configured as a boundary layer ingestion (BLI) fan. The electric propulsion engine 300 may be configured in substantially the same manner as the electric propulsion engine 106 described above with reference to Figs. 1-2 and the vehicle 10 may be configured in substantially the same manner as the exemplary vehicle 10 described above with reference to Figs. 1-2.

As shown in Fig. 4, the electric propulsion engine 300 defines an axial direction A2 extending along a longitudinal centerline axis 302 (or center axis) that extends therethrough for reference, as well as a radial direction R2 and a circumferential direction C2 (a direction extending about the axial direction A2, not shown). Additionally, the vehicle 10 defines a mean line 15 extending therethrough.

In general, the electric propulsion engine 300 includes a fan 304 rotatable about the centerline axis 302 and a structural support system 308. The structural support system 308 is configured for mounting the electric propulsion engine 300 to the vehicle 10, and for the embodiment depicted generally includes an inner frame support 310, a plurality of forward support members 312, an outer nacelle 314, a plurality of aft support members 316, and a tail cone 318. As is depicted, the inner frame support 310 is attached to a bulkhead 320 of the fuselage 12. The plurality of forward support members 312 are attached to the inner frame support 310 and extend outward generally along the radial direction R2 to the nacelle 314. The nacelle 314 defines an airflow passage 322 with an inner casing 324 of the electric propulsion engine 300, and at least partially surrounds the fan 304. Further, for the embodiment depicted, the nacelle 314 extends substantially three hundred and sixty degrees (360°) around the mean line 15 of the vehicle 10. The plurality of aft support members 316 also extend generally along the radial direction R2 from, and structurally connect, the nacelle 314 to the tail cone 318.

In certain embodiments, the forward support members 312 and the aft support members 316 may each be generally spaced along the circumferential direction C2 of the electric propulsion engine 300. Additionally, in certain embodiments the forward support members 312 may be generally configured as inlet guide vanes and the aft support members 316 may generally be configured as outlet guide vanes. If configured in such a manner, the forward and aft support members 312, 316 may direct and/or condition an airflow through the airflow passage 322 of the electric propulsion engine 300. Notably, one or both of the forward support members 312 or aft support members 316 may additionally be configured as variable guide vanes. For example, the support member may include a flap (not shown) positioned at an aft end of the support member for directing a flow of air across the support member.

It should be appreciated, however, that in other exemplary embodiments, the structural support system 308 may instead include any other suitable configuration and, e.g., may not include each of the components depicted and described above. Alternatively, the structural support system 308 may include any other suitable components not depicted or described above.

The electric propulsion engine 300 additionally defines a nozzle 326 between the nacelle 314 and the tail cone 318. The nozzle 326 may be configured to generate an amount of thrust from the air flowing therethrough, and the tail cone 318 may be shaped to minimize an amount of drag on the electric propulsion engine 300. However, in other embodiments, the tail cone 318 may have any other shape and may, e.g., end forward of an aft end of the nacelle 314 such that the tail cone 318 is enclosed by the nacelle 314 at an aft end. Additionally, in other embodiments, the electric propulsion engine 300 may not be configured to generate any measurable amount of thrust, and instead may be configured to ingest air from a boundary layer of air of the fuselage 12 of the vehicle 10 and add energy/ speed up such air to reduce an overall drag on the vehicle 10 (and thus increase a net thrust of the vehicle 10).

Referring still to Fig. 4, the fan 304 includes a plurality of fan blades 328 and a fan shaft 330. The plurality of fan blades 328 are attached to the fan shaft 330 and spaced generally along the circumferential direction C2 of the electric propulsion engine 300. As depicted, the plurality fan blades 328 are, for the embodiment depicted, at least partially enclosed by the nacelle 314.

Moreover, for the embodiment depicted, the fan 304 is rotatable about the centerline axis 302 of the electric propulsion engine 300 by an electric machine. More particularly, for the embodiment depicted, the electric machine is configured as an electric motor 336 and the electric propulsion engine 300 additionally includes a power gearbox 338 mechanically coupled to the electric motor 336. Additionally, the fan 304 is mechanically coupled to the power gearbox 338. For example, for the embodiment depicted, the fan shaft 330 extends to and is coupled to the power gearbox 338, and a driveshaft 340 of the electric motor 336 extends to and is also coupled to the power gearbox 338. Accordingly, for the embodiment depicted, the fan 304 is rotatable about the central axis 302 of the electric propulsion engine 300 by the electric motor 336 through the power gearbox 338.

The power gearbox 338 may include any type of gearing system for altering a rotational speed between the driveshaft 340 and the fan shaft 330. For example, the power gearbox 338 may be configured as a star gear train, a planetary gear train, or any other suitable gear train configuration. Additionally, the power gearbox 338 may define a gear ratio, which as used herein, refers to a ratio of a rotational speed of the driveshaft 340 to a rotational speed of the fan shaft 330. In certain exemplary embodiments, the gear ratio of the power gearbox 338 may be greater than about 1:1 and less than about 1:5. For example, in certain embodiments, the gear ratio of the power gearbox 338 may be between about 1:1.5 and about 1:3.5, such as between about 1:1.2 and about 1:2.75. It should be appreciated, that as used herein, terms of approximation, such as "about" or "approximately," refer to being within a 10% margin of error.

Referring still to the exemplary embodiment of Fig. 4, the electric motor 336 is located at least partially within the fuselage 12 of the vehicle 10. More specifically, the fan 304 is positioned forward of the power gearbox 338 along the central axis 302 of the electric propulsion engine 300, and the electric motor 336 is positioned forward of the fan 304 along the central axis 302 of the electric propulsion engine 300. However, according to alternative embodiments, power gearbox 338 could be positioned at a forward location or at any other suitable location within vehicle 10.

Further, in certain exemplary embodiments, the electric propulsion engine 300 may be configured with a gas-electric propulsion system, such as the gas-electric propulsion system 100 described above with reference to Figs. 1-2. In such an embodiment, the electric motor 336 may receive power from one or both of an energy storage device or an electric generator, such as the energy storage device 110 or electric generator 108 of Figs. 1-2.

Referring now to Fig. 5, a schematic diagram of a system for controlling power distribution at a hybrid-electric system is provided (hereinafter, "system 13"). Embodiments of the system 13 include an engine 1100 operably coupled to an electric machine 1110. Various embodiments of the system 13 depicted in Fig. 5 may be configured in accordance with the vehicle 10 depicted and described with regard to Figs. 1-2; the engine 200 depicted and described with regard to Fig. 3; and/or the electric propulsion engine 300 depicted and described with regard to Fig. 4, such as further described below.

In various embodiments, the system 13 includes a computing system 1210 configured to output command controls, perform operations, and/or store one or more charts, graphs, tables, curves, limits, or schedules in accordance with operations, instructions, steps, or methods described herein. The computing system 1210 is communicatively coupled to the engine 1100 to generate power or torque to be extracted by the electric machine 1110 to generate electric power to the load device 1120. The computing system 1210 is communicatively coupled a first power electronics device 1115. The first power electronics device 1115 is any appropriate power conditioning device for converting a current to or from DC to AC, or DC to DC, in accordance with aspects of this disclosure. In a particular embodiment, the first power electronics device 1115 is a first inverter. The first power electronics device 1115 is configured in a power or torque control mode. As such, the first power electronics device 1115 regulates or otherwise controls an amount of power extracted by the electric machine 1110 from the engine 1100 within a torque limit associated with the engine 1100. In particular embodiments, the first power electronics device 1115 commands the electric machine 1110 to extract power from the engine 1100. Power extraction by the electric machine 1110 from the engine 1100 is correspondingly within a voltage limit at the electric bus 1117.

The computing system 1210 is in operable communication with the first power electronics device 1115 and the engine 1100. As such, the computing system 1210 provides and outputs control commands to the engine 1100 to generate power or torque in accordance with one or more engine operating limits. The engine operating limits include, but are not limited to, surge margin or stall margin at one or more compressors (e.g., LP compressor 210, HP compressor 212), an exhaust gas temperature (e.g., combustion gases generated by the combustion section 214 and expanded through the turbines 216, 218), one or more pressure ratios (e.g., compressor pressure ratio at one or both compressors 210, 212, fan pressure ratio at 202), rotational speed (e.g., at one or more spools 222, 224), or combinations thereof, or minimum and/or maximum limits associated therewith, or changes therein, or rates of change therein. The engine operating limits may generally include any appropriate limit, margin, range, or ratio associated with operability, performance, health, safety, or desired durability of a gas turbine engine. Furthermore, the computing system 1210 provides and outputs control commands associate with desired power outputs from the electric machine 1110 to the load device 1120. The first power electronics device 1115, in a power or torque control configuration, alters or modulates torque extracted by the electric machine 1110 from the engine 1100. The amount of torque extracted accordingly controls or modulates an amount of power output through an electric bus 1117 operably connecting the first power electronics device 1115 to a second power electronics device 1125 and load device 1120.

The second power electronics device 1125 is any appropriate power conditioning device for converting a current to or from DC to AC, or DC to DC, in accordance with aspects of this disclosure. In a particular embodiment, the second power electronics device 1125 is a second inverter. The second power electronics device 1125 is configured in a voltage control mode. As such, the second power electronics device 1125 regulates or otherwise controls an amount of power, or current, provided from the first power electronics device 1115 to the load device 1120. In particular embodiments, the second power electronics device 1125 regulates the amount of power provided to the load device 1120 based on a voltage at the electric bus 1117, such as a voltage limit.

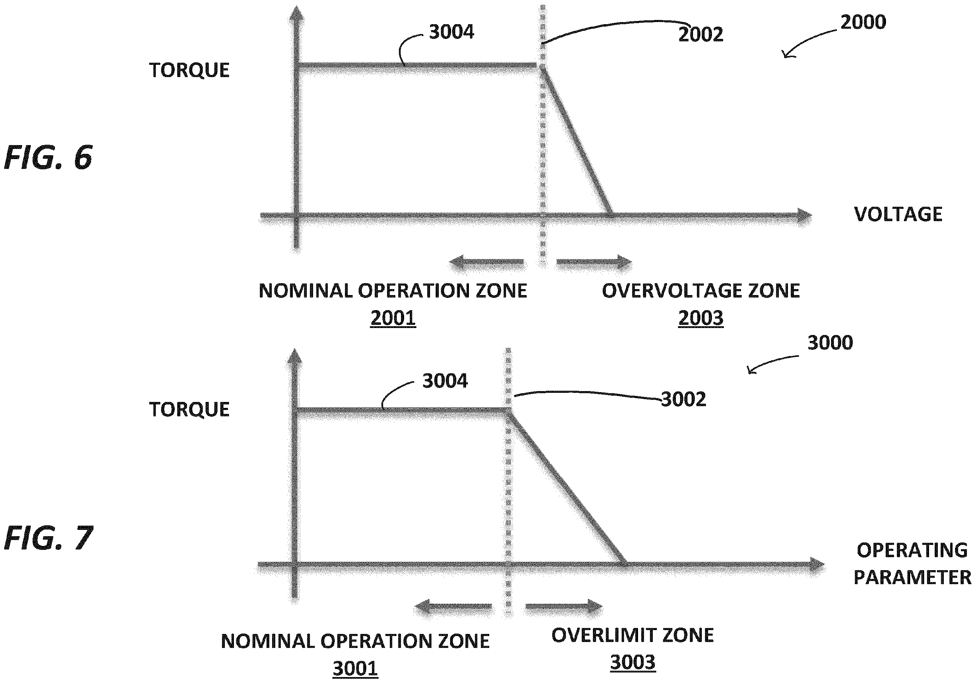

Referring now to Figs. 6-7, graphs depicting exemplary control curves of the system 13 are provided. Fig. 6 depicts a torque control graph 2000 associated with the first power electronics device 1115. Fig. 7 depicts a voltage control graph 3000 associated with the second power electronics device 1125. Referring to Fig. 5, Fig. 6, and Fig. 7, during an exemplary embodiment of operation of the system 13, the computing system 1210 commands the engine 1100 to operate, such as to generate torque to be extracted by the electric machine 1110 to generate power to the load device 1120. The graph 2000 at Fig. 6 depicts torque extraction 3004 from the engine 1100. The first power electronics device 1115 controls or regulates the electric machine 1110 to extract torque from the engine 1100 within a nominal voltage zone 2001, such as depicted to the left of a voltage limit 2002 depicted in Fig. 6. The voltage limit 2002 may particularly correspond to a voltage limit at the bus 1117. The first power electronics device 1115 outputs power to the second power electronics device 1125 through the electric bus 1117.

The second power electronics device 1125 allows the load device(s) 1120 to receive power through the bus 1117 until the load device(s) 1120 are operating within a nominal load device operation zone 3001, such as depicted to the left of an operating limit 3002 depicted in Fig. 7. The operating limit 3002 corresponds to any appropriate operability, performance, health, safety, or other limit associated with operation of the load device 1120, such as described herein. The operating limit 3002 may correspond to one or more predetermined operating parameters or limits for the load device 1120 to operate at or within the operating limit 3002 (i.e., within the nominal load device operation zone 3001). The second power electronics device 1125 outputs power from the second power electronics device 1125 to the load device 1120 to maintain operation of the load device(s) 1120 within the nominal load device operation zone 3001.

Various conditions may cause the load device(s) 1120 to approach or exceed operating limit 3002, at which case the load device(s) is operating within an overlimit zone 3003 (Fig. 7). When the load device 1120 is operating above the load device operating limit 3002, and accordingly within the overlimit zone 3003 of the load device 1120, the second power electronics device 1125 limits current to the load device 1120 to return the load device 1120 to within the nominal load device operating zone 3001 (Fig. 7). As current, and subsequently, power, received by the load device 1120 is accordingly limited by the second power electronics device 1125 to return the load device 1120 to the nominal load device operating zone 3001, the first electronics device 1115 senses, measures, or otherwise detects an increase in voltage at the bus 1117. Referring to Fig. 6, when the first power electronics device 1115 approaches or exceeds the voltage limit 2002, the measured voltage is within an overvoltage zone 2003. The first power electronics device 1115 commands, controls, or otherwise modulates the electric machine 1110 to adjust the amount of torque extracted from the engine 1100. Accordingly, the adjusted torque extraction decreases the power output from the electric machine 1110, and accordingly the voltage at the bus 1117 is reduced to return to the nominal voltage zone 2001.

Briefly, it will be appreciated that in other exemplary aspects, the second power electronics device 1125 may additionally or alternatively be configured to modulate power received by the load device 1120 from the first power electronics device 1115 based on a voltage of the electric bus 1117. The voltage may be the voltage limit 2002 of the electric bus 1117, or may be a desired operating voltage for the electric bus 1117 (e.g., based on an operating parameter of the engine, an operating schedule, etc.). For example, when the load device is operating below the overlimit zone 3003, but the electric bus 1117 is at or exceeding the voltage limit 2002, the second power electronics device 1115 may be operated to reduce the voltage of the electric bus 1117 (e.g., by increasing power, or rather current, provided to the load device 1120).

Accordingly, the system 13 allows for the computing system 1210 to control and command torque extraction from the engine 1100 within the operability, performance, health, and safety limits of the engine 1100 via regulating bus voltage (e.g., at bus 1117). The system 13 may particularly designate the engine 1100 as a priority load at which the operating limits associated with the engine 1100 are more carefully managed, regulated, or controlled relative to a secondary load at the load device(s) 1120. In particular, the system 13 allows for torque extraction to be a function of all operability, performance, health, or safety limits, ranges, etc. at the engine 1100. Stated differently, the system 13 allows for changes in torque extraction (i.e., magnitudes of change and/or rates of change) from the engine 1100 for power provided to the load device(s) 1120 occurs within all limits associated with the engine 1100. As such, the system 13 may obviate or remove a need for control commands or communication between the computing system 1210 and the load device(s) 1120, which may simplify control systems, reduce weight, reduce failure modes, and improve overall performance. Additionally, or alternatively, the load device 1120 may be any electrically-driven device that allows for fluctuations in operating state relative to a nominal operating state. For instance, the load device configured as an electric propulsion engine may allow for changes in operating state (e.g., rotational speed, power or thrust output, pressure ratio, or temperature, etc.) of up to 100% from a nominal load device operating zone of the load device.

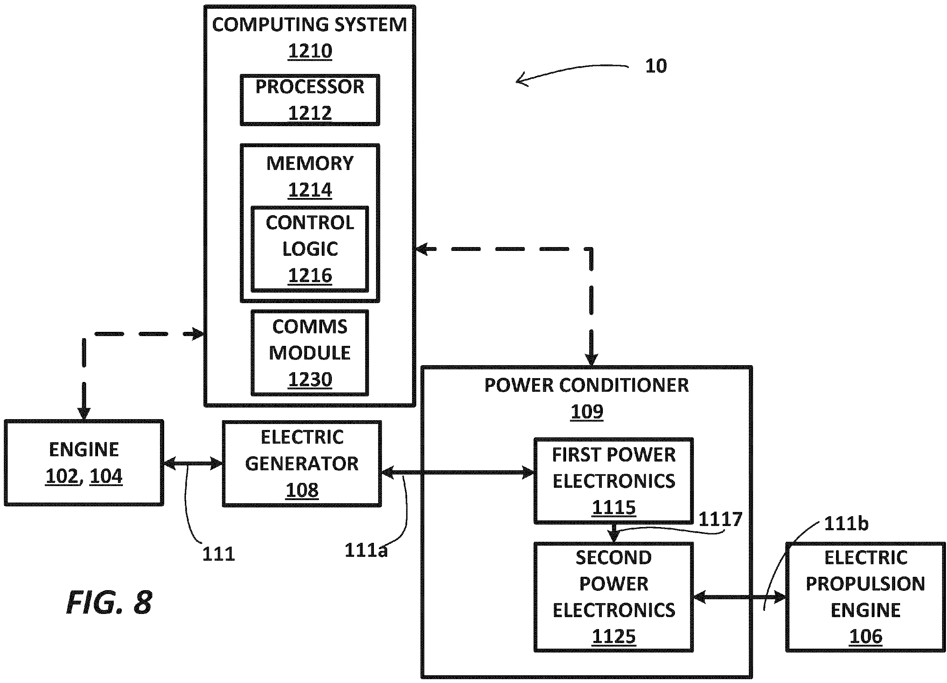

Referring now to Fig. 8, a schematic diagram is provided of an embodiment of the vehicle 10 such as described with regard to Figs. 1-2 including an embodiment of the system 13 such as described with regard to Fig. 5. The embodiment provided in Fig. 8 includes the power conditioner 109 including one or both of the first power electronics device 1115 and the second power electronics device 1125 such as described in regard to Fig. 5. It should be appreciated that although the power conditioner 109 is depicted as including the first power electronics device 1115 and the second power electronics device 1125, other embodiments of the vehicle 10 and system 13 may separate the first power electronics device 1115 and the second power electronics device 1125 from the power conditioner 109.

The embodiment provided in Fig. 8 includes one or both engines 102, 104 generating power via torque extracted by the electric generator(s) 108. The engine 102, 104 corresponds to the engine 1100 depicted and described with regard to Fig. 5. The electric generator 108 corresponds to the electric machine 1110 depicted and described with regard to Fig. 5. The electric propulsion engine 106 corresponds to the load device(s) 1120 depicted and described with regard to Fig. 5. The engine 102, 104, the electric generator 108, the power conditioner 109, and the electric propulsion engine 106 are in operable communication via the electric communication bus 111, corresponding at least in part to the bus 1117 depicted and described with regard to Fig. 5. In particular, the electric communication bus 111 may include a first portion 111a operably connecting the electric generator 108 to the first power electronics device; a second portion 111b operability connecting the second power electronics device 1125 to the electric propulsion engine 106, and the voltage bus 1117 operably connecting the first power electronics device 1115 and the second power electronics device 1125, such as described with regard to Fig. 5.

Although not further depicted herein, the schematic diagram of the vehicle 10 depicted in Fig. 8 may further include one or more of the energy storage device 110 in operable arrangement with the electric generator 108, the power conditioner 109, and/or via the electric communication bus 111.

During operation of the vehicle 10, various factors may cause the electric propulsion engine 106 to require varying amounts of power for operation within the nominal load device operation zone 3001, or at the limit 3002, or generally outside of the overlimit zone 3003, such as depicted and described with regard to Fig. 7. For instance, changes in density, speed, temperature, pressure, or boundary layer conditions of air at the electric propulsion engine 106 may cause the electric propulsion engine 106 to require changes in power received at the electric propulsion engine 106 for desired operation. Such changes may be based on changes in altitude, attitude, ambient condition, vehicle speed, Mach number, or other operating conditions of the vehicle 10. When the electric propulsion engine 106 is at or approaching the overlimit zone 3003, such as a temperature limit, a flow rate limit, a rotational speed limit (e.g., rotor speed, blade tip speed, etc.), pressure ratio, or other appropriate limit associated with operability, performance, health, or safety of the electric propulsion engine 106, the second power electronics device 1125 accordingly reduces the power or current received at the electric propulsion engine 106, such as to maintain or return the electric propulsion engine 106 to the nominal load device operating zone 3001 depicted in Fig. 7.

As the power or current decreases, the first power electronics device 1115 senses an increase in voltage at the bus 1117 and controls the electric generator 108 to reduce torque extraction from one or more engines 102, 104. Particularly, the command or control to reduce torque extraction is based at least on the operating parameters for the engine 102, 104 stored at the computing system 1210. Accordingly, power generated by the electric generator 108 is reduced and the voltage is maintained within the nominal voltage zone 2001, or reduced from the overvoltage zone 2003. Furthermore, the magnitude and/or rate of change of torque extraction from the engine 102, 104 is based on operability, performance, health, and/or safety limits of the engine 102, 104 stored at the computing system 1210.

As such, the vehicle 10 allows for overlimit protection (e.g., overspeed protection, over-temperature protection, etc.) of the electric propulsion engine 106 without requiring command control communication between electric propulsion engine control (e.g., the second power electronics device 1125) and the computing system 1210. Additionally, or alternatively, the vehicle 10 allows for such protections without requiring command control communication between the electric generator 108 and the electric propulsion engine 106.

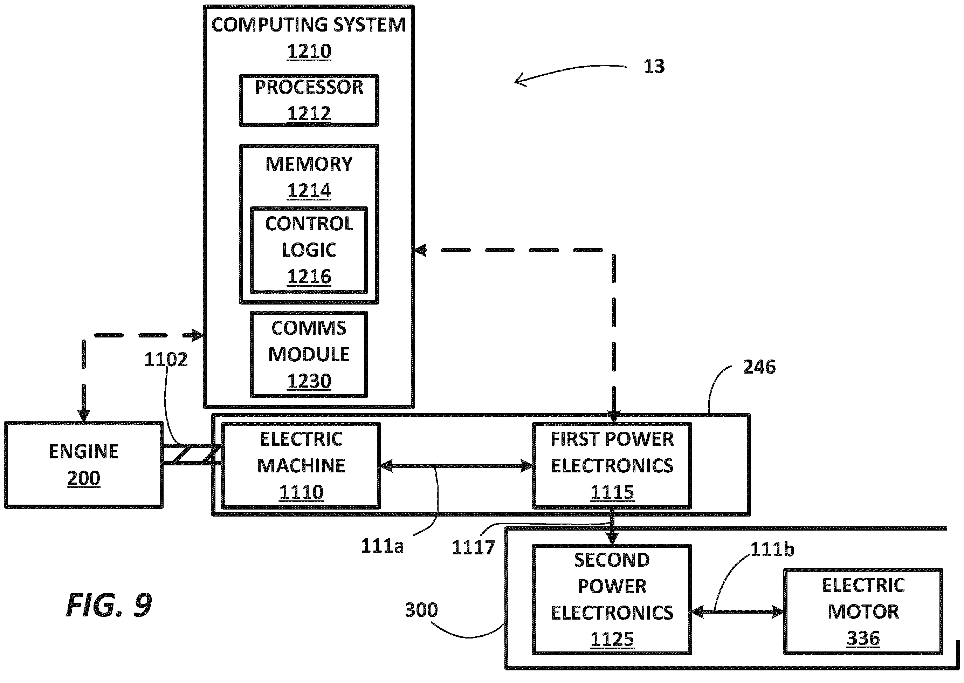

Referring now to Fig. 9, a schematic diagram is provided of an embodiment of the system 13 such as described with regard to Fig. 5, including an embodiment of the engine 200 such as described with regard to Fig. 3, and including an embodiment of the electric propulsion engine 300 described with regard to Fig. 4. The embodiment provided in Fig. 9 may be configured substantially similarly as described with regard to any one or more embodiments described with regard to Figs. 1-8. Fig. 9 may include components or elements depicted and described with regard to Fig. 1-6, and such components may be removed for clarity.

The embodiment provided in Fig. 9 includes one or more engines 200 generating electric power via torque extracted by the electric machine 246 via a shaft 1102 (e.g., HP shaft 222 or LP shaft 224 in Fig. 3). The electric machine 246, such as described with regard to Fig. 3, may further include the electric machine 1110 and the first power electronics device 1115 such as described with regard to Fig. 5. The engine 200 corresponds to the engine 1100 depicted and described with regard to Fig. 5. The electric propulsion engine 300, such as described with regard to Fig. 4, may further include the second power electronics device 1125 such as described with regard to Fig. 5. The electric motor 336, such as described with regard to Fig. 4, corresponds to the load device(s) 1120 depicted and described with regard to Fig. 5. The engine 200, the electric machine 246, and the electric propulsion engine 300 are in operable communication via the bus 111 (including the first and second portions 111a, 111b), 1117, such as described with regard to Figs. 1-8.

Operation of the embodiment of the system 13 such as provided with regard to Fig. 9 is substantially similar as described with regard to any one or more embodiments of Figs. 1-8. It should be appreciated that the operating limit 3002, the nominal load device operating zone 3001, and the overlimit zone 3003 may correspond to any appropriate operability, performance, health, and/or safety limit of the electric motor 336. Such parameters or limits may include, but are not limited to, temperature, power output, or speed of the electric motor 336. Such limits may additionally, or alternatively, include one or more limits corresponding to the fan 304 (Fig. 4) configured to receive power from the electric motor 336.

The system 13 provided with regard to Fig. 9 allows for overlimit protection (e.g., overspeed protection, over-temperature protection, etc.) of the electric propulsion engine 300 without requiring command control communication between electric propulsion engine 300 and the computing system 1210. Additionally, or alternatively, the vehicle 10 allows for such protections to the electric propulsion engine 300 without requiring command control communication between the electric machine 246 and the electric motor 336 distributing power to the fan 304 (Fig. 4).

In a particular embodiment, the vehicle 10 and system 13 may allow for the load device 1120, such as the electric propulsion engine 106, 300 to automatically generate propulsive power in the event of a failure at the engine 102, 104, 200, 1100, or computing system 1210. As the second power electronics device 1125 is configured to control or maintain the load device 1120 within the nominal load device operating zone 3001, the second power electronics device 1125 may allow for increases in current or power through the bus 1117 to the load device 1120 when the operating parameter associated with the operating limit 3002 decreases below a minimum or margin relative to the operating limit 3002. As the second power electronics device 1125 would control for this increase without regard for functions, controls, or operating states at the computing system 1210 or engine 1100, the system 13 may draw power from any one or more energy storage devices 110 operably coupled to the second power electronics device 1125 via the electric communication bus 111, such as depicted and described with regard to Fig. 1.

Although Figs. 8-9 provide particular embodiments of the load device 1120 as a boundary layer ingestion fan propulsion system, it should be appreciated that the load device 1120 depicted and described herein may include any appropriate electrically-driven system. Various embodiments of the load device may be an electrically-driven device, such as a thrust-generating system (e.g., an electrically-driven propulsion system, a boundary layer ingestion (BLI) fan, a rotary wing device, a lift or tilt-rotor system, etc.), pumps, compressors, thermal systems (e.g., environmental control system (ECS), thermal management system (TMS), heating elements (e.g., anti-icing systems), radars, LIDARs, avionics, communications devices, directed-energy systems, electric motors, or other electrical systems at the vehicle.

The computing system 1210 depicted and described herein can generally correspond to any suitable processor-based device, including one or more computing devices. Certain embodiments of the computing system 1210 include a full authority digital engine controller (FADEC), a digital engine controller (DEC), a hybrid-electric engine controller, or other appropriate computing device configured to operate the engine 1100, electric machine 1110, and the first power electronics device 1115, or embodiments such as provided herein.

The computing system 1210 may include one or more processors 1212 and one or more associated memory devices 1214 configured to perform a variety of computer-implemented functions, such as the methods described herein. As used herein, the term "processor" refers not only to integrated circuits referred to in the art as being included in a computer, but also refers to a controller, microcontroller, a microcomputer, a programmable logic controller (PLC), an application specific integrated circuit (ASIC), a Field Programmable Gate Array (FPGA), and other programmable circuits. Additionally, the memory 1214 can generally include memory element(s) including, but not limited to, computer readable medium (e.g., random access memory (RAM)), computer readable non-volatile medium (e.g., flash memory), a compact disc-read only memory (CD-ROM), a magneto-optical disk (MOD), a digital versatile disc (DVD), non-transitory computer-readable media, and/or other suitable memory elements or combinations thereof.

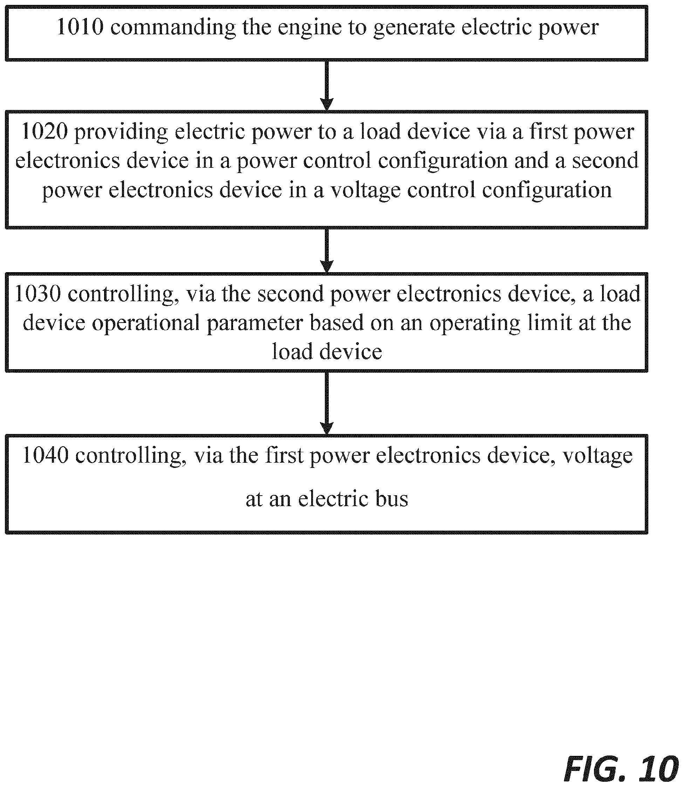

The computing system 1210 may include control logic 1216 stored in the memory 1214. The control logic 1216 may include computer-readable instructions that, when executed by the one or more processors 1212, cause the one or more processors 1212 to perform operations. In various embodiments, the operations include one or more steps of a method for controlling or operating a hybrid-electric system (hereinafter, "method 1000"), such as outlined in the flowchart provided in Fig. 10. The method 1000 may be stored as computer-readable instructions and executed with any appropriate computing system, engine, load device, first power electronics device, and second power electronics device, such as depicted and described in various embodiments with regard to Figs. 1-9.

The method 1000 includes at 1010 commanding the engine (e.g., engine 1100) to generate torque, such as via engine shaft 1102 (e.g., shaft 222, 224 in Fig. 3) operably coupled to the electric machine 1110 (Fig. 5), to generate electric power. The method 1000 at 1010 may generally include operating the engine in accordance with operability, performance, health, and/or safety parameters associated with the engine.

The method 1000 includes at 1020 providing electric power to a load device (e.g., load device 1120) via a first power electronics device (e.g., first power electronics device 1115) in a power or torque control configuration and a second power electronics device (e.g., second power electronics device 1125) in a voltage control configuration, such as described with regard to Figs. 1-9 herein. In a particular embodiment, the method 1000, and the system 13 described herein, include the first power electronics device in serial connection via an electric bus (e.g., bus 1117) with the second power electronics device.

The method 1000 includes at 1030 controlling, via the second power electronics device, a load device operational parameter based on an operating limit at the load device (e.g., operating limit 3002 in Fig. 7). The operating limit may generally correspond to a minimum and/or maximum load device operating parameter, such as, but not limited to, one or more parameters associated with rotational speed, temperature, pressure, flow rate, power or thrust output, or other operating parameter at the load device. The second power electronics device operates in a voltage control mode to regulate the load device voltage within predetermined limits. Accordingly, the second power electronics device operates in voltage control mode by controlling the load device to operate within the predetermined operating limits for the load device.

The method 1000 further includes at 1040 controlling, via the first power electronics device, the voltage at an electric bus. In various embodiments, such as described with regard to Figs. 1-9 herein, the method 1000 at 1030 includes controlling, via the second power electronics device, controlling the load device operational parameter via controlling power output or current to the load device in correspondence with maintaining or operating within the voltage requirement associated with the operating limit. With regard to Figs. 1-9 herein, the method 1000 at 1040 includes controlling, via the first power electronics device, the voltage at the electric bus via controlling power or torque extraction from the electric machine. In a particular embodiment, the method 1000 at 1040 includes controlling power or torque extraction by the electric machine while maintaining the engine within operability, performance, health, and/or safety limits of the engine.

The instructions included at the control logic 1216 and stored in the memory 1214 can include one or more steps of the method 1000 stored, converted, or written as software in any suitable programming language or code that can be implemented in hardware. Additionally, and/or alternatively, the instructions can be executed in logically and/or virtually separate threads on processor(s) 1212. The memory device(s) 1214 can further store data that can be accessed by the processor(s), such as limits, charts, lookup tables, schedules, curves, or graphs associated with maintaining the engine within operability, performance, health, and/or safety limits of the engine (e.g., such as described with regard to step 1040), or graph 2000 (Fig. 6). The second power electronics device 1125 may further include any appropriate hardware and/or software to store or otherwise control the load device 1120 such as provided with regard to graph 3000 and/or the method 1000 at step 1030, or such as otherwise described herein.

The computing system 1210 may also include a communications interface module 1230. In various embodiments, the communications interface module 1230 can include associated electronic circuitry that is used to send and receive data or control commands such as described herein. As such, the communications interface module 1230 of the computing system 1210 can be used to receive data from one or more sensors, measurement devices, or calculations with regard to the engine 1100, the first power electronics device 1115, and the bus 1117. As described above, the communications interface module may communicate commands, modulations, adjustments, or other functions, or receive an operating parameter, a voltage state, and operating state, or other value indicative of a present or desired operating mode of the engine 1100, the electric machine 1110, and the first electronics device 1115. It should be appreciated that calculations or measurements corresponding thereto may include, but are not limited to, temperatures, pressures, voltages, currents, frequencies, wavelengths, flow rates, gradients, differences, or changes therein, or rates of change, other appropriate calculations or measurements such as described herein. In a particular embodiment, the system 13 is advantageously configured without communication between the computing system 1210 and the second power electronics device 1125 and the load device 1120, or particularly the load device configured as the electric propulsion engine 106, 300.

The computing system(s) 1210 can also include a network interface used to communicate, for example, with the other components of system or apparatus. The network interface can include any suitable components for interfacing with one or more network(s), including for example, transmitters, receivers, ports, controllers, antennas, and/or other suitable components.

It should be appreciated that the communications interface module 1230 can be any combination of suitable wired and/or wireless communications interfaces and, thus, can be communicatively coupled to one or more components of the apparatus via a wired and/or wireless connection. As such, the computing system 1210 may obtain, determine, store, generate, transmit, or operate any one or more steps of the method described herein via a distributed network. For instance, the network can include a SATCOM network, ACARS network, ARINC network, SITA network, AVICOM network, a VHF network, a HF network, a Wi-Fi network, a WiMAX network, a gatelink network, etc.

Embodiments of the system may provide particular advantages and benefits relative to hybrid-electric propulsion systems, such as by maintaining engine operation within all operability, performance, health, and/or safety limits associated with the engine. Such limits may particularly include stall or surge limits at one or more compressors, exhaust gas temperatures at or downstream of a turbine section, thrust outputs, rotational speeds at one or more spools, pressure ratios across one or more of a compressor section, a fan section, or a core engine, or changes therein, or rates of change therein. A particular advantage may include maintaining the engine within one or more such limits, or all such limits, while allowing the load device, such as the electric propulsion engine, to operate or "float" within relatively larger tolerances or limits relative to nominal operation of the load device. As such, changes in power requirements at the load device may not substantially affect operation of the engine within operability, performance, health, and/or safety limits at the engine. Such benefits may further be provided without direct communication between the computing system and the second power electronics device. Accordingly, the system and vehicle may decrease weight, complexity, and failure modes, such as by decreased wiring and communications devices, fewer interferences or conflicts between power demands and system limits between the engine and the load device, and separating potential failures at one component (e.g., the engine) from operation or operability at another component (e.g., the load device).

This written description uses examples to disclose the disclosure preferred embodiment, including the best mode, and also to enable any person skilled in the art to practice the disclosure, including making and using any devices or systems and performing any incorporated methods. The patentable scope of the disclosure is defined by the claims, and may include other examples that occur to those skilled in the art.

## Claims

1. A system for controlling power distribution, the system comprising:
an engine operably coupled to an electric machine (246, 1110);
a first power electronics device (1115) operably coupled to the electric machine (246, 1110), wherein the first power electronics device (1115) is configured to modulate power extracted by the electric machine (246, 1110) from the engine;
a second power electronics device (1125) operably coupled to a load device (1120), wherein the second power electronics device (1125) is operably coupled to receive power from the first power electronics device (1115) via an electric bus (1117), and wherein the second power electronics device (1125) is configured to modulate power received by the load device (1120) from the first power electronics device (1115), and wherein modulating power received by the load device (1120) is based at least on an operating limit (3002) corresponding to the load device (1120), a voltage of the electric bus (1117), or both; and wherein
the first power electronics device (1115) is configured to sense, measure, or otherwise detect an increase in voltage at the electric bus (1117); and
the first power electronics device (1115) is further configured to, based on the sensed, measured, or otherwise detected increase in voltage at the electric bus (1117), command, control, or otherwise modulate the electric machine (246, 1110) to decrease the amount of power extracted from the engine, and
a computing system operably coupled to the engine and the first power electronics device (1115), wherein the computing system is configured to send control commands to the engine and the first power electronics device.

2. The system of claim 1, wherein the first power electronics device (1115) and the second power electronics device (1125) are in serial connection via the electric bus (1117).

3. The system of claim 1 or 2, wherein the computing system is configured to perform operations, the operations comprising:
commanding the engine to generate mechanical power;
commanding the electric machine (246, 1110) to extract the mechanical power and to generate electric power to the load device (1120) via the electric bus (1117); and
controlling, via the first power electronics device (1115), a voltage at the electric bus (1117).

4. The system of claim 3, wherein controlling the voltage at the electric bus (1117) comprises controlling power extraction from the engine by the electric machine (246, 1110) based on a voltage limit (2002) at the electric bus (1117).

5. The system of claim 4, wherein controlling power extraction from the engine by the electric machine (246, 1110) comprises maintaining the engine within operability limits of the engine, performance limits of the engine, health limits of the engine, safety limits of the engine, or a combination thereof.

6. The system of claim 5, wherein the load device (1120) is an electrically-driven device.

7. The system of any preceding claim, wherein the operating limit (3002) corresponding to the load device (1120) corresponds to a rotational speed, a temperature, a pressure, a power output, or a thrust output associated with the load device (1120).

8. A method (1000) for controlling a hybrid-electric system, the method (1000) comprising:
generating electric power with an engine having an electric machine (246, 1110);
providing the electric power to a load device (1120) via a first power electronics device (1115) and a second power electronics device (1125);
controlling, via the second power electronics device (1125), a load device (1120) operational parameter based on an operating limit (3002) at the load device (1120);
controlling, via the first power electronics device (1115), a voltage at an electric bus (1117) operably coupling the first power electronics device (1115) to the second power electronics device (1125);
sensing, measuring, or otherwise detecting, via the first power electronics device (1125), an increase in voltage at the electric bus (1117); and
based on the sensed, measured, or otherwise detected increase in voltage at the electric bus (1117), commanding, controlling, or otherwise modulating, via the first power electronics device (1115), the electric machine (246, 1110) to decrease the amount of electric power extracted from the engine.

9. The method (1000) of claim 8, wherein controlling the load device (1120) operational parameter comprises controlling the load device (1120) via the second power electronics device (1125) in a voltage control mode.

10. The method (1000) of claim 9, wherein controlling the load device (1120) operational parameter comprises controlling power output to the load device (1120) in correspondence with maintaining the load device (1120) within the operating limit (3002) at the load device (1120).

11. The method (1000) of claim 10, wherein controlling power output comprises controlling current to the load device (1120) via the second power electronics device (1125).

12. The method (1000) of claim 10 or 11, wherein controlling the voltage at the electric bus (1117) comprises controlling power extraction from the electric machine (246, 1110) via a computing system operably coupled to the first power electronics device (1115) and the engine.

13. The method (1000) of any of claims 8 to 12, the method (1000) comprising:
controlling, via a computing system operably coupled to the first power electronics device (1115) and the engine, power extraction by the electric machine (246, 1110) while maintaining the engine within operability limits of the gas turbine engine, performance limits of the gas turbine engine, health limits of the gas turbine engine, safety limits of the gas turbine engine, or a combination thereof.

## Patentansprüche

1. System zur Steuerung der Leistungsverteilung, das System umfassend:
einen Motor, der betriebsmäßig mit einer elektrischen Maschine (246, 1110) gekoppelt ist;
eine erste Leistungselektronikvorrichtung (1115), die betriebsmäßig mit der elektrischen Maschine (246, 1110) gekoppelt ist, wobei die erste Leistungselektronikvorrichtung (1115) konfiguriert ist, um die von der elektrischen Maschine (246, 1110) aus dem Motor entnommene Leistung zu modulieren;
eine zweite Leistungselektronikvorrichtung (1125), die betriebsmäßig mit einer Lastvorrichtung (1120) gekoppelt ist, wobei die zweite Leistungselektronikvorrichtung (1125) betriebsmäßig gekoppelt ist, um über eine elektrische Sammelschiene (1117) Leistung von der ersten Leistungselektronikvorrichtung (1115) zu empfangen, und wobei die zweite Leistungselektronikvorrichtung (1125) konfiguriert ist, um die von der Lastvorrichtung (1120) empfangene Leistung aus der ersten Leistungselektronikvorrichtung (1115) zu modulieren, und wobei die Modulation der von der Lastvorrichtung (1120) empfangenen Leistung zumindest auf einer der Lastvorrichtung (1120) entsprechenden Betriebsgrenze (3002), einer Spannung der elektrischen Sammelschiene (1117) oder beidem basiert; und
wobei
die erste Leistungselektronikvorrichtung (1115) konfiguriert ist, um einen Spannungsanstieg an der elektrischen Sammelschiene (1117) zu erfassen, zu messen oder auf andere Weise zu detektieren; und
die erste Leistungselektronikvorrichtung (1115) ferner konfiguriert ist, um basierend auf dem erfassten, gemessenen oder anderweitig detektierten Spannungsanstieg an der elektrischen Sammelschiene (1117) die elektrische Maschine (246, 1110) zu befehlen, zu steuern oder anderweitig zu modulieren, um die vom Motor entnommene Leistungsmenge zu verringern, und
ein Computersystem, das betriebsmäßig mit dem Motor und der ersten Leistungselektronikvorrichtung (1115) gekoppelt ist, wobei das Computersystem konfiguriert ist, um Steuerbefehle an den Motor und die erste Leistungselektronikvorrichtung zu senden.

2. System nach Anspruch 1, wobei die erste Leistungselektronikvorrichtung (1115) und die zweite Leistungselektronikvorrichtung (1125) über die elektrische Sammelschiene (1117) in Reihenschaltung stehen.

3. System nach Anspruch 1 oder 2, wobei das Computersystem konfiguriert ist, um die Vorgänge durchzuführen, die Vorgänge umfassend:
Befehlen an den Motor, mechanische Leistung zu erzeugen;
Befehlen an die elektrische Maschine (246, 1110), die mechanische Leistung zu entnehmen und über die elektrische Sammelschiene (1117) elektrische Leistung für die Lastvorrichtung (1120) zu erzeugen; und
Steuern, über die erste Leistungselektronikvorrichtung (1115), einer Spannung an der elektrischen Sammelschiene (1117).

4. System nach Anspruch 3, wobei das Steuern der Spannung an der elektrischen Sammelschiene (1117) das Steuern der Leistungsentnahme aus dem Motor durch die elektrische Maschine (246, 1110) auf der Grundlage einer Spannungsgrenze (2002) an der elektrischen Sammelschiene (1117) umfasst.

5. System nach Anspruch 4, wobei das Steuern der Leistungsentnahme aus dem Motor durch die elektrische Maschine (246, 1110) das Halten des Motors innerhalb der Betriebsgrenzen des Motors, der Leistungsgrenzen des Motors, der Auflagenbeschränkungen des Motors, der Sicherheitsbeschränkungen des Motors oder einer Kombination davon umfasst.

6. Das System nach Anspruch 5, wobei die Lastvorrichtung (1120) eine elektrisch betriebene Vorrichtung ist.

7. System nach einem der vorstehenden Ansprüche, wobei die Betriebsgrenze (3002), die der Lastvorrichtung (1120) entspricht, einer Drehzahl, einer Temperatur, einem Druck, einer Leistungsausgabe oder einer Schubausgabe entspricht, die der Lastvorrichtung (1120) zugeordnet ist.

8. Verfahren (1000) zum Steuern eines Hybrid-Elektrosystems, das Verfahren (1000) umfassend:
Erzeugen von elektrischer Leistung mit einem Motor, der eine elektrische Maschine (246, 1110) aufweist;
Bereitstellen der elektrischen Leistung für eine Lastvorrichtung (1120) über eine erste Leistungselektronikvorrichtung (1115) und eine zweite Leistungselektronikvorrichtung (1125);
Steuern, über die zweite Leistungselektronikvorrichtung (1125), eines Betriebsparameters einer Lastvorrichtung (1120) basierend auf einer Betriebsgrenze (3002) an der Lastvorrichtung (1120);
Steuern, über die erste Leistungselektronikvorrichtung (1115), einer Spannung an einer elektrischen Sammelschiene (1117), welche die erste Leistungselektronikvorrichtung (1115) betriebsmäßig mit der zweiten Leistungselektronikvorrichtung (1125) koppelt;
Erfassen, Messen oder anderweitiges Detektieren eines Spannungsanstiegs an der elektrischen Sammelschiene (1117) über die erste Leistungselektronikvorrichtung (1125); und
basierend auf dem erfassten, gemessenen oder anderweitig detektierten Spannungsanstieg an der elektrischen Sammelschiene (1117) Befehlen, Steuern oder anderweitiges Modulieren der elektrischen Maschine (246, 1110) über die erste Leistungselektronikvorrichtung (1115), um die Menge der dem Motor entnommenen elektrischen Leistung zu verringern.

9. Verfahren (1000) nach Anspruch 8, wobei das Steuern des Betriebsparameters der Lastvorrichtung (1120) das Steuern der Lastvorrichtung (1120) über die zweite Leistungselektronikvorrichtung (1125) in einem Spannungssteuerungsmodus umfasst.

10. Verfahren (1000) nach Anspruch 9, wobei das Steuern des Betriebsparameters der Lastvorrichtung (1120) das Steuern der Leistungsausgabe an die Lastvorrichtung (1120) in Übereinstimmung mit dem Halten der Lastvorrichtung (1120) innerhalb der Betriebsgrenze (3002) an der Lastvorrichtung (1120) umfasst.

11. Verfahren (1000) nach Anspruch 10, wobei das Steuern der Leistungsausgabe das Steuern des Stroms zur Lastvorrichtung (1120) über die zweite Leistungselektronikvorrichtung (1125) umfasst.

12. Verfahren (1000) nach Anspruch 10 oder 11, wobei das Steuern der Spannung an der elektrischen Sammelschiene (1117) das Steuern der Leistungsentnahme aus der elektrischen Maschine (246, 1110) über ein Computersystem umfasst, das betriebsmäßig mit der ersten Leistungselektronikvorrichtung (1115) und dem Motor gekoppelt ist.

13. Verfahren (1000) nach einem der Ansprüche 8 bis 12, das Verfahren (1000) umfassend:
Steuern, über ein Computersystem, das betriebsmäßig mit der ersten Leistungselektronikvorrichtung (1115) und dem Motor gekoppelt ist, der Leistungsentnahme durch die elektrische Maschine (246, 1110), während der Motor innerhalb der Betriebsgrenzen des Gasturbinenmotors, der Leistungsgrenzen des Gasturbinenmotors, der Auflagenbeschränkungen des Gasturbinenmotors, der Sicherheitsbeschränkungen des Gasturbinenmotors oder einer Kombination davon gehalten wird.

## Revendications

1. Système de commande de distribution d'énergie, le système comprenant :
un moteur couplé de manière opérationnelle à une machine électrique (246, 1110) ;
un premier dispositif électronique de puissance (1115) couplé de manière opérationnelle à la machine électrique (246, 1110), dans lequel le premier dispositif électronique de puissance (1115) est configuré pour moduler la puissance extraite du moteur par la machine électrique (246, 1110) ;
un second dispositif électronique de puissance (1125) couplé de manière opérationnelle à un dispositif de charge (1120), dans lequel le second dispositif électronique de puissance (1125) est couplé de manière opérationnelle pour recevoir de l'énergie du premier dispositif électronique de puissance (1115) par l'intermédiaire d'un bus électrique (1117), et dans lequel le second dispositif électronique de puissance (1125) est configuré pour moduler la puissance reçue par le dispositif de charge (1120) à partir du premier dispositif électronique de puissance (1115), et dans lequel la modulation de la puissance reçue par le dispositif de charge (1120) est basée au moins sur une limite de fonctionnement (3002) correspondant au dispositif de charge (1120), une tension du bus électrique (1117), ou les deux ; et
dans lequel
le premier dispositif électronique de puissance (1115) est configuré pour capter, mesurer ou détecter d'une autre manière une augmentation de la tension au niveau du bus électrique (1117) ; et
le premier dispositif électronique de puissance (1115) est en outre configuré pour, sur la base de l'augmentation de tension détectée, mesurée ou autrement détectée au niveau du bus électrique (1117), commander, contrôler ou moduler autrement la machine électrique (246, 1110) afin de réduire la quantité de puissance extraite du moteur, et
un système informatique couplé de manière opérationnelle au moteur et au premier dispositif électronique de puissance (1115), dans lequel le système informatique est configuré pour envoyer des commandes de contrôle au moteur et au premier dispositif électronique de puissance.

2. Système selon la revendication 1, dans lequel le premier dispositif électronique de puissance (1115) et le second dispositif électronique de puissance (1125) sont en connexion série par l'intermédiaire du bus électrique (1117).

3. Système selon la revendication 1 ou 2, dans lequel le système informatique est configuré pour effectuer des opérations, les opérations comprenant :
la commande du moteur de produire de l'énergie mécanique ;
la commande de la machine électrique (246, 1110) d'extraire l'énergie mécanique et de générer de l'énergie électrique vers le dispositif de charge (1120) par l'intermédiaire du bus électrique (1117) ; et
le contrôle, par l'intermédiaire du premier dispositif électronique de puissance (1115), d'une tension au niveau du bus électrique (1117).

4. Système selon la revendication 3, dans lequel le contrôle de la tension au niveau du bus électrique (1117) comprend le contrôle de l'extraction de puissance du moteur par la machine électrique (246, 1110) sur la base d'une limite de tension (2002) au niveau du bus électrique (1117).

5. Système selon la revendication 4, dans lequel le contrôle de l'extraction de puissance du moteur par la machine électrique (246, 1110) comprend le maintien du moteur dans les limites de fonctionnement du moteur, les limites de performance du moteur, les limites de santé du moteur, les limites de sécurité du moteur, ou une combinaison de ces limites.

6. Système selon la revendication 5, dans lequel le dispositif de charge (1120) est un dispositif à entraînement électrique.

7. Système selon l'une quelconque revendication précédente, dans lequel la limite de fonctionnement (3002) correspondant au dispositif de charge (1120) correspond à une vitesse de rotation, une température, une pression, une puissance de sortie ou une poussée de sortie associée au dispositif de charge (1120).

8. Procédé (1000) destiné à contrôler un système hybride-électrique, le procédé (1000) comprenant :
la production d'énergie électrique à l'aide d'un moteur doté d'une machine électrique (246, 1110) ;
la fourniture de l'énergie électrique à un dispositif de charge (1120) par l'intermédiaire d'un premier dispositif électronique de puissance (1115) et d'un second dispositif électronique de puissance (1125) ;
le contrôle, par l'intermédiaire du second dispositif électronique de puissance (1125), d'un paramètre opérationnel du dispositif de charge (1120) sur la base d'une limite de fonctionnement (3002) au niveau du dispositif de charge (1120) ;
le contrôle, par l'intermédiaire du premier dispositif électronique de puissance (1115), d'une tension au niveau d'un bus électrique (1117) reliant de manière opérationnelle le premier dispositif électronique de puissance (1115) au second dispositif électronique de puissance (1125) ;
la détection, la mesure ou toute autre forme de détection, par l'intermédiaire du premier dispositif électronique de puissance (1125), d'une augmentation de la tension au niveau du bus électrique (1117) ; et
sur la base de l'augmentation de tension détectée, mesurée ou autre au niveau du bus électrique (1117), la commande, le contrôle ou le module, par l'intermédiaire du premier dispositif électronique de puissance (1115), de la machine électrique (246, 1110) afin de réduire la quantité d'énergie électrique extraite du moteur.

9. Procédé (1000) selon la revendication 8, dans lequel le contrôle du paramètre opérationnel du dispositif de charge (1120) comprend le contrôle du dispositif de charge (1120) par l'intermédiaire du second dispositif électronique de puissance (1125) dans un mode de contrôle de tension.

10. Procédé (1000) selon la revendication 9, dans lequel le contrôle du paramètre opérationnel du dispositif de charge (1120) comprend le contrôle de la puissance de sortie vers le dispositif de charge (1120) en correspondance avec le maintien du dispositif de charge (1120) dans la limite de fonctionnement (3002) au niveau du dispositif de charge (1120).

11. Procédé (1000) selon la revendication 10, dans lequel le contrôle de la puissance de sortie comprend le contrôle du courant vers le dispositif de charge (1120) par l'intermédiaire du second dispositif d'électronique de puissance (1125).

12. Procédé (1000) selon la revendication 10 ou 11, dans lequel le contrôle de la tension au niveau du bus électrique (1117) comprend le contrôle de l'extraction de puissance de la machine électrique (246, 1110) par l'intermédiaire d'un système informatique couplé de manière opérationnelle au premier dispositif électronique de puissance (1115) et au moteur.

13. Procédé (1000) selon l'une quelconque des revendications 8 à 12, le procédé (1000) comprenant :
le contrôle, par l'intermédiaire d'un système informatique couplé de manière opérationnelle au premier dispositif électronique de puissance (1115) et au moteur, de l'extraction de puissance par la machine électrique (246, 1110) tout en maintenant le moteur dans les limites d'opérabilité du moteur à turbine à gaz, les limites de performance du moteur à turbine à gaz, les limites de santé du moteur à turbine à gaz, les limites de sécurité du moteur à turbine à gaz, ou une combinaison de ceux-ci.
